# DEMANDE DE BREVET EUROPEEN

(11) **EP 1 186 821 A1**
(43) Date de publication de la demande: **13.03.2002**
(21) Numéro de dépôt: 01420190.9
(22) Date de dépôt: 11.09.2001
(51) Int. Cl.: F16L 19/065

(54) **Raccord de tuyauterie**

(30) Priorité: 11.09.2000 FR 0011522; 03.10.2000 FR 0012551
(71) Demandeur: Parmentier, Claude, 01230 St. Rambert en Bugey (FR)
(72) Inventeur: Parmentier, Claude, 01230 St. Rambert en Bugey (FR)

(57) **Abrégé**

Dispositif interne de réduction du nombre des pièces libres (rondelle de compression, bague ou jonc de serrage, éventuellement joint ou autres pièces) liés principalement aux raccords de tuyauterie à compression de joint, démontable et réutilisable, toutes matières et formes.

L'invention concerne un dispositif monobloc à compression permettant d'installer les raccords à compression de joint sur les tuyauteries avec un gain de temps au montage (ou démontage), une fiabilité adaptée, voir améliorée, et sans risque de perte des pièces internes en gardant la démontabilité et l'intégrité du tuyau.

Il est constitué, d'une bague monobloc à compression (0) qui rassemble, directement ou indirectement en une seule pièce, qui de plus est clipsable, zone (5), dans l'écrou (8): l'élément de compression, zone (1) avec sa zone rigide (2) et l'élément de serrage, zone (3) avec sa ou ses fentes (4) - et dans un deuxième temps (option) le joint (9) qui peut être solidarisé à la bague (0) zone (1). Le dispositif dans son écrou relie le corps du raccord (10) et le tube (11).

Différentes formes de bagues sont envisagées. Une vérification visuelle du serrage est possible par observation de la fermeture de la ou des fentes (4) dépassantes de l'écrou (8).

## Description

La présente invention concerne un dispositif interne aux raccords de tuyauterie dit à compression de joint (démontable et réutilisable --toutes matières et formes) caractérisé d'une simplification et réduction des pièces internes libres qui contribue à une diminution du nombre des composants et une augmentation de son efficacité d'emploi (fiabilité adaptée, voir améliorée) et qui relie le corps du raccord avec la tuyauterie en concervant également la démontabilité du dispositif et l'intégrité de la tuyauterie.

Une liaison sur une installation de tuyautage industrielle (au sens large) (ou domestique éventuellement) est constituée: des tuyauteries à rabouter, du corps du raccord qui assure la liaison des tuyaux (union, té, équerre, croix, ...) et de plusieurs composants qui assurent la fixation des deux éléments tube / corps du raccord, leur étanchéité, la tenue aux sollicitations du circuit et de son environnement, la démontabilité.

Ces composants sont, sur les raccords dits à compression de joint concernés principalement par cette invention (en général - non systématique) au nombre de quatre:
- un écrou qui assure l'effort mécanique nécessaire à la mise en place des pièces internes
- une pièce interne du type joint torique ou autres formes qui assure l'étancheité par compression. Cette pièce est indépendante
- une pièce interne du type élément de compression du joint (rondelle ou autre forme). Cette pièce est indépendante
- une pièce interne du type élément de serrage sur le tube (bague, jonc ou autres formes) pour les principes concernés. Cette pièce est indépendante

Ces nombreux composants sont perdables lors des manipulations, longs à mettre en place dans le raccord en usine du fabricant avant expédition chez le client qui doit ensuite démonter le raccord et les pièces internes avant de les installer l'une après l'autre et dans un ordre précis sur ses tuyauteries. De plus, l'état du serrage est peu contrôlable et les caractéristiques mécaniques de tenue en général limitées.

Le dispositif selon l'invention permet de remédier à ces inconvénients et dans un premier temps il rassemble en une seule pièce, plusieurs éléments (zone) intégrésà l'écrou par clipsage. Soit l'élément de compression et l'élément de serrage (reste deux pièces: joint + écrou avec son dispositif intégré) et dans un deuxième temps il peut rassembler le joint, l'élément de compression et l'élément de serrage clipsable dans l'écrou (reste l'écrou avec son dispositif intégré).

Cette invention permet simultanément et avec une seule pièce:
- de rester solidaire par « clipsage » dans l'écrou
- de comprimer le joint (torique ou autres joints)
- de se fermer sur la tuyauterie lors du serrage de l'écrou
- de rester démontable et réutilisable

Le logement du joint, habituellement usiné sur le corps du raccord, peut être usiné sur le dispositif pour recevoir le joint libre. Ce joint peut également être solidaire de la bague monobloc de compression, ce qui supprime toute pièce libre dans le raccord (reste le dispositif solidaire de l'écrou).

Cette bague monobloc à compression permet de diminuer les temps de montage (minimum de pièce et montage ou démontage rapide et simple), de limiter les pertes des pièces lors des manipulations et doit permettre de garder voir d'améliorer les caractéristiques mécaniques de bases (étanchéité/pression/vibration).

Ce principe de bague monobloc à compression pour système interne de raccord de tuyauterie est adaptable principalement sur raccords appelés "à compression de joint -- démontable" de différentes origines (fabriqué et commercialisé dans le monde et ayant pour application principale les circuits pneumatiques du ferroviaire et de nombreuses applications industrielles).

La figure 1 illustre la bague monobloc en perspective et en demi coupe constituée de plusieurs éléments (zone) en une seule pièce.

La figure 2 permet d'analyser le montage de cette bague monobloc à compression à l'intérieur d'un raccord existant.

Les figures 3 à 6 proposent quelques formes possibles de la bague monobloc à compression.

La figure 7 illustre en vue de face partiellement coupée la bague rendue monobloc par un assemblage imperdable de deux éléments (zone) en continuité de forme.

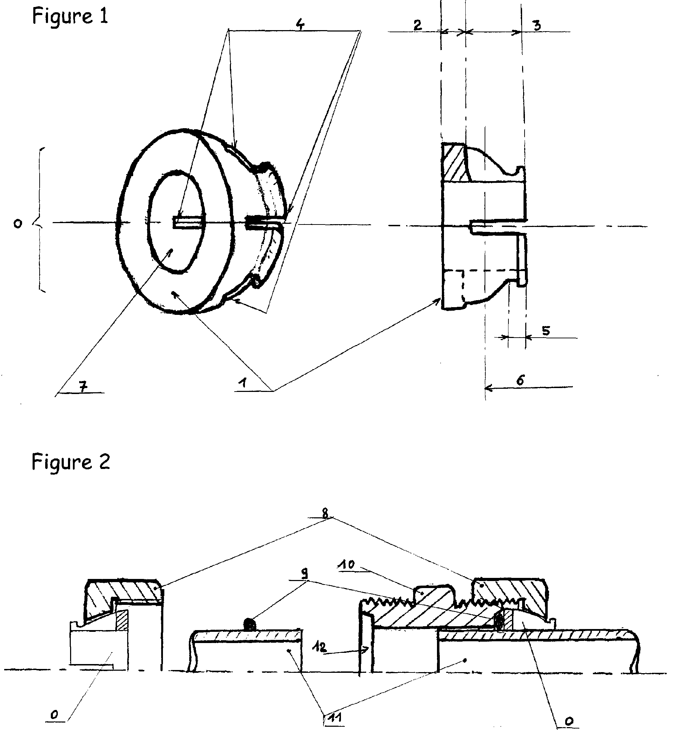

### Figure 1- représentation de la bague monobloc à compression (O)

- zone rigide (2), solidaire de 0, pour assurer l'aspect monobloc du système. Cette zone peut être cylindrique ou être dans la continuité de forme de la zone déformable (3).
- face (1), solidaire de 0, est la zone de compression du joint torique (ou autres formes) et a un état de surface compatible pour ne pas détériorer le joint à la compression lorsque le joint est libre et lorsque le logement du joint se trouve sur le corps du raccord.
   Dans un deuxième temps (option), cette surface peut recevoir le joint, torique (ou autres formes) :
   . soit à l'aide d'un usinage identique au (12) figure 2 existant sur le corps. Dans ce cas, il y a transfert de cet usinage du corps vers la bague monobloc à compression. Le joint peut rester libre ou être collé.
   . soit à l'aide d'un usinage particulier pour coller, mouler ou adhériser ou autres moyens le joint et le rendre solidaire de la bague monobloc de compression.
- zone déformable (3), solidaire de 0, zone de contact avec le fond de l'écrou (qui en général et conique), possède une forme appropriée pour un bon appui et possède une, deux, trois, quatre fentes ou plus (4) de différentes formes - deux ou quatre (fonction du diamètre) étant le nombre idéal pour assurer une déformation suffisante, souple et uniforme de cette zone qui permet la déformation pour le «clipsage » sur l'écrou et principalement le serrage sur la tuyauterie. Cette zone reste, en utilisation, dans les limites du domaine déformation élastique des matériaux utilisés.
- collerette (5), solidaire de 0, pour clipsage dans l'écrou existant lors du montage du raccord chez le fabricant (il est possible d'extraire facilement cette bague de l'écrou). La forme de cette collerette sera adaptée pour un montage doux dans l'écrou et un maintien dans ce dernier malgré les montages et démontages du raccord sur la tuyauterie.
- génératrice d'appui (6), située dans la zone déformable solidaire de 0. C'est là que s'effectue le contact avec le cône (ou autres formes) en fond d'écrou. La largeur et l'emplacement de cette génératrice est fonction de la forme de la bague monobloc et de la forme du cône (ou autres formes) en fond d'écrou.
- surface de contact (7) avec la tuyauterie, solidaire de (0). Elle permet le contact avec la tuyauterie pour le maintien mécanique, son état de surface peut influencer le maintien mécanique.

La matière de cette bague monobloc de compression peut être métallique: laiton, acier, alliage léger, inox..., plastique et dérivés, matériaux composites, frittés ou assemblage de plusieurs matériaux adaptés aux caractéristiques des systèmes à tuyauter.

Figure 2 - exemple de montage de cette bague monobloc à compression (0). La mise en place dans l'écrou (8) s'effectue en principe chez le fabricant en faisant pénétrer la bague (0) dans l'écrou et en effectuant un effort de poussée pour assurer le « clipsage ».
Sur les sites de montage des tuyauteries, il ne reste qu'à glisser la bague monobloc à compression (0) (solidaire de son écrou (8)) sur la tuyauterie (11). Si le joint (9) est libre, glisser le joint et serrer l'écrou (8) au couple désiré; si le joint (9) est intégré à la bague monobloc, il ne reste qu'à serrer l'écrou (8) sur le corps du raccord (10) au couple désiré pour que la bague monobloc à compression assure ses fonctions.

La partie clipsée (5) qui dépasse de l'écrou (8) devient un élément essentiel de vérification visuel du bon serrage de ce principe sur la tuyauterie par observation de la fermeture (diminution de la largeur de la ou des fentes ) de la ou des fentes due au serrage.

Le couple de serrage, appliqué à partir d'une clé sur l'écrou et qui permet la mise en fonction de la bague monobloc, reste fonction des qualités des matières des composants et épaisseurs et matières des tubes.

Les formes et dimensions de cette bague monobloc à compression tiennent compte du diamètre de la tuyauterie (de 4mm à 65 mm pour les gammes de tuyauteries les plus classiques et de 65 à plusieurs centaines de mm pour les tuyauteries en grosse industrie), du diamètre interne de l'écrou (fonction des écrous existants) et du cône (ou autre forme) en fond d'écrou et sont définies pour assurer la meilleure efficacité.

Plusieurs formes sont possibles pour la face de compression du joint (1), la portée (6) de la zone déformable (3), la forme de la ou des fentes (4), la portée sur tuyauterie (7).

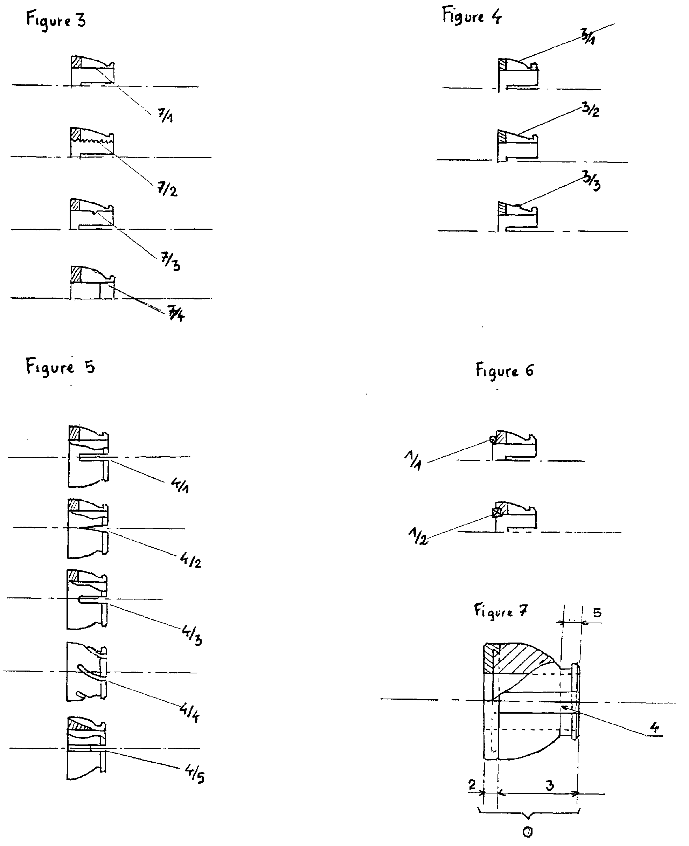

Figure 3 - Portée sur la tuyauterie (7): Cette portée est d'un diamètre suffisant pour permettre à la bague monobloc de se monter sur tous types de tuyauterie et tuyau pour les versions standards basse pression; son diamètre sera plus tolérancé pour les applications sur tuyauteries calibrées (haute pression ou applications en process et instrumentation). Les coupes de la bague monobloc illustrent différentes possibilités suivant les applications :
(7/1) une portée cylindrique (ou légèrement conique) lisse
(7/2) une portée cylindrique (ou légèrement conique) rainurée (filetage ou stries ou moletage ou autre état de surface rugueux)
(7/3) une portée cylindrique (ou légèrement conique) lisse avec un ou plusieurs bourrelés d'accrochages de forme diverse (arrondi ou en arrête droite ou inclinée...).
(7/4) une portée suivant les solutions ci-dessus avec un léger cône d'entrée côté collerette (de façon à ce que le serrage de la bague sur la tuyauterie ne se face pas sous la collerette zone 5 figure 1 (qui est une zone à faible épaisseur donc fragilisée en cas de vibrations de la tuyauterie).

Figure 4 - Portée de la zone déformable (3) en contact avec le cône (ou autres formes) de l'écrou existant : cette portée reçoit l'effort de serrage de l'écrou. Les coupes de la bague monobloc illustrent différentes possibilités:
- (3/1) conique bombée ou semi-sphérique
- (3/2) conique droit
- (3/3) conique bombé ou semi-sphérique ou conique droit avec un bourrelé dans l'axe de la génératrice d'appui (6) ou autres formes qui permettent un appui correct de la zone déformable sur le fond de l'écrou.

Figure 5 - Formes de la ou des fentes (4) de la bague 0. La largeur et pénétration de la ou des fentes est fonction de la malléabilité de la matière choisie et des possibilités de fabrication. Les représentations de la bague monobloc illustrent différentes possibilités:
(4/1) coupe droite avec fond d'usinage droit ou arrondi centré vers l'extérieur ou vers l'intérieur
(4/2) fentes coniques
(4/3) fentes droites avec arrondi au fond
(4/4) hélicoïdale ou autre forme permettant une déformation dans les limites élastiques de la matière
(4/5) fentes suivant les formes ci-dessus, mais, pour des facilités d'usinage, il serait possible de les usiner avec entrée de l'outil de coupe côté collerette zone 5 et sortie de l'outil vers le haut de la zone 2. La forme de l'outil et la rigidité / élasticité recherchée (fonction de la matière) sont les points essentiels.

Figure 6 - Etat de surface et forme de la zone de compression (1) compatibles pour ne pas détériorer le joint à la compression. Dans un deuxième temps plusieurs améliorations peuvent être considérées comme:
(1/1) le maintien (ou pas) du joint sur la face de la bague monobloc à compression (collage du joint dans une légère empreinte usinée ou moulée...).
(1/2) le maintien d'un joint torique ou spécifique moulé et (ou) adhérisé dans un logement effectué sur la face de la bague monobloc à compression. Dans ce cas de figure, il n'est plus nécessaire de prévoir un logement (figure 2 - rep 12) pour le joint dans le corps du raccord.

Figure 7 - la pièce interne de compression du joint définie comme zone 2 et la pièce interne de serrage sur le tube définie comme zone 3 avec une fente sont assemblées en une seule pièce (0) qui devient monobloc indirectement, en continuité de forme, par des moyens d'assemblage les rendant imperdables du type encliquetage, clipsage, agrafage. La zone 2 peut être une pièces embouties ou (et) suivant les cas déjà définis. Dans l'exemple illustré, la zone 2 reçoit la zone 3 en déformant cette zone 3 et en la relâchant. Cette opération de montage peut s'effectuer simultanément lors du clipsage sur l'écrou.

Autre cas de figure (non illustré) : la bague monobloc 0 peut ne pas comprendre la zone 5, elle ne permet alors pas l'imperdabilitéde l'assemblage sur l'écrou 8.

Exemple de cotation pour une bague monobloc de compression destinée à un raccord de 10 (tuyauterie diamètre 10mm nominal) habituellement utilisé en application ferroviaire et industrielle en général:
figure 1
- zone 1 : état de surface environ IT 7 si le joint reste libre
- zone 2: environ larg 3mm et diamètre 15,5mm
- zone 3: environ larg 8mm
- zone 5: environ larg 3mm et diamètre 13mm (diam extérieur de la collerette)
- fentes 4: quatre fentes profondeur idem zone 3, épaisseur environ 1mm
- zone 7: diamètre alésage environ 10,3 H12
- zone 6: pour la forme sphérique bombée, rayon de 14 mm environ
   (tolérance générale environ 0 +0,2)
   (état de surface général: environ IT 10 pour le reste)
   (concentricité de l'ordre de 0,25)
   (Ebavurage correct)

Pour d'autres diamètres il y a adéquation entre tuyauterie / raccord existant / bague monobloc de compression (voir parfois homothétie).

## Revendications

1. Dispositif pour raccords de tuyauterie dit à compression de joint, démontable et réutilisable, adaptable sur toutes tuyauteries industrielles et domestiques ; destiné à relier la tuyauterie avec le corps du raccord du type comportant : un écrou qui assure l'effort mécanique nécessaire à la mise en place des pièces internes, un joint, une pièce interne de compression du joint assurant l'étanchéité du raccord, une pièce interne de serrage sur le tube ; **caractérisé en ce que**, d'une part, la pièce interne de compression du joint et la pièce interne de serrage sur le tube sont rassemblées en une seule pièce (0) qui devient monobloc directement ou indirectement et se définit sous formes de zones (2), (3), (5) et **en ce que** d'autre part cette pièce (0) est pourvue d'une zone (5) d'intégration à l'écrou (8) par « clipsage » rendant l'ensemble imperdable et permettant un gain de-temps au montage et démontage et **en ce que** les zones (2), (3) de la pièce monobloc (0) sont constituées respectivement : d'une zone rigide (2) pour assurer l'aspect monobloc du système et dans sa continuité d'une zone déformable (3), et **en ce que** la zone rigide présente une face (1) formant zone de compression du joint (9) et **en ce que** la zone déformable (3) qui forme zone de contact avec le fond de l'écrou (8) présente une forme conique, par exemple droite, bombée ou semi-sphérique telle qu'elle permet un bon appui et possède au moins une fente (4) pour assurer une déformation suffisante, souple, de cette zone permettant la déformation pour le clipsage sur l'écrou (8) et le serrage sur la tuyauterie par une surface de contact (7) avec la tuyauterie et est réalisée en matériaux par exemple métalliques, plastiques; matériaux composites ou frittés ou plusieurs matériaux assemblés de sorte à rester, en utilisation, dans les limites du domaine de déformation élastique des dits matériaux et **en ce que** la zone déformable (3) comporte pour son « clipsage » sur l'écrou (8) une collerette (5) adaptée pour un montage doux dans l'écrou et un maintien dans ce dernier malgré les montages et démontages du raccord sur la tuyauterie.

2. Dispositif selon la revendication 1 **caractérisé en ce que** la collerette (5) de la zone de « clipsage » est prévue dépassante de l'écrou (8) de sorte de former un élément de vérification visuelle du bon serrage sur la tuyauterie par observation de la fermeture de la ou des fentes due au serrage.

3. Dispositif selon la revendication 1 ou 2 **caractérisé en ce que** la surface de la portée (7) présente un léger cône d'entrée côté collerette (5) de façon à ce que le serrage de la bague (0) sur la tuyauterie ne se fasse pas sous la collerette (5) qui est une zone à faible épaisseur.

4. Dispositif selon l'une quelconque des revendications précédentes **caractérisé en ce que** la zone déformable (3) présente une génératrice d'appui (6), située dans la zone dite déformable (3) où s'effectue le contact avec la forme en fond d'écrou dont la largeur et l'emplacement sont fonction de la forme conique de la bague monobloc (0) par exemple droite, bombée ou semi-sphérique avec un bourrelet dans l'axe de cette génératrice d'appui (6) pour permettre un appui correct en fonction de la forme en fond d'écrou (8).

5. Dispositif selon l'une quelconque des revendications précédentes **caractérisé en ce que** la surface de portée sur la tuyauterie (7) présente une portée cylindrique ou légèrement conique lisse avec un ou plusieurs bourrelets d'accrochages arrondi ou en arête droite ou incliné de façon à assurer un maintien mécanique recherché sur la tuyauterie sans créer sur celle-ci d'amorce à la rupture.

6. Dispositif selon l'une quelconque des revendications précédentes **caractérisé en ce que** la ou les fentes (4) de la bague (0) présentent une forme, soit sous forme de coupe droite avec fentes coniques ou fentes droites avec fond d'usinage droit ou arrondi, centré vers l'intérieur ou l'extérieur.

7. Dispositif selon l'une quelconque des revendications 1 à 5 **caractérisé en ce que** la bague (0) comporte une ou plusieurs fentes (4) hélicoïdales.

8. Dispositif selon l'une quelconque des revendications 5 et 6 **caractérisé en ce que** la ou les fentes (4) sont usinées avec entrée d'outil de coupe côté collerette zone (5) et sortie vers le haut de la zone (2).

9. Dispositif selon l'une quelconque des revendications précédentes **caractérisé en ce que** la bague monobloc (0) comporte sur la face (1) de la zone (2) un logement de réception d'un joint (9) ou de maintien d'un joint par collage, moulage ou adhérisation et **en ce qu'**il est destiné à être utilisé avec un corps de raccord (10) sans l'usinage (12) de logement du joint (9).

10. Dispositif selon l'une quelconque des revendications 1 à 8 **caractérisé en ce que** le joint (9), destiné à être utilisé avec un corps de raccord (10) standard pourvu d'un usinage (12) de reception du joint, est rendu solidaire de la bague monobloc de compression (0).

11. Dispositif selon l'une quelconque des revendications 1 à 7, 9 et 10 **caractérisé en ce que** d'une part la pièce interne de compression du joint définie comme zone (2) et la pièce interne de serrage sur le tube définie comme zone (3) avec une fente, sont assemblées en une seule pièce (0) qui devient monobloc indirectement, en continuité de forme, par des moyens d'assemblage les rendant imperdables du type encliquetage, clipsage, agrafage
